# EUROPÄISCHE PATENTSCHRIFT

(11) **EP 0 407 389 B1**
(45) Veröffentlichungstag und Bekanntmachung des Hinweises auf die Patenterteilung: **31.03.1993**
(21) Anmeldenummer: 89901259.5
(22) Anmeldetag: 11.01.1989
(51) Int. Cl.: B65G 47/14

(54) **EINRICHTUNG ZUM SPEICHERN UND ZUFÜHREN VON KLEINTEILEN**
DEVICE FOR STORING AND DELIVERING SMALL ARTICLES
DISPOSITIF POUR STOCKER ET DELIVRER DE PETITES PIECES

(30) Priorität: 11.02.1988 DE 3804114
(43) Veröffentlichungstag der Anmeldung: 16.01.1991
(73) Patentinhaber: ROBERT BOSCH GMBH, 70442 Stuttgart (DE)
(72) Erfinder: VOSS, Jürgen, D-7000 Stuttgart 31 (DE); HÜTTER, Odo, D-7312 Kirchheim Teck (DE); SPERR, Gerhard, D-7050 Waiblingen (DE); KURZ, Werner, D-7300 Esslingen (DE)
(86) Internationale Anmeldenummer: DE8900011
(87) Internationale Veröffentlichungsnummer: WO8907567

(56) Entgegenhaltungen:
- WO-A-87/04688
- DE-A- 2 802 188
- US-A- 3 841 471

## Beschreibung

Die Erfindung geht aus von einer Einrichtung zum Speichern und Zuführen von Kleinteilen nach der Gattung des Hauptanspruchs. Bei einer zum Stand der Technik zählenden Einrichtung dieser Gattung (Patentanmeldung DE-A-36 02 773.1) ist der Boden des Speicherbehälters mit einer glatten und völlig ebenen Oberfläche versehen, auf welcher die gespeicherten Kleinteile zum Eingangsbereich der ansteigenden Förderstrecke rutschen. Bei dieser Ausführung muß der Neigungswinkel und die Oberflächenbeschaffenheit des Bodens des Speicherbehälters, sowie dessen Antrieb sorgfältig auf die gespeicherten Kleinteile abgestimmt sein, wenn ein ordnungsgemäßes Zuführen der Kleinteile auf die ansteigende Förderstrecke gewährleistet sein soll. Auch ist zu beachten, daß Verschmutzungen der Kleinteile, fehlerhafte Kleinteile und andere Fremdeinflüsse die sichere Funktion der Einrichtung beeinträchtigen können.

Bei der erfindungsgemäßen Anordnung mit den kennzeichnenden Merkmalen des Hauptanspruchs ist die Abstimmung der die Funktion der Einrichtung beeinflussenden Parameter weniger kritisch als bei einer Ausführung ohne hemmende Schultern im Boden des Speicherbehälters und außerdem kann auch ein kleinerer Neigungswinkel für dessen Boden als bei der bekannten Ausführung vorgesehen werden.

Durch die in den Unteransprüchen enthaltenen Maßnahmen sind vorteilhafte Weiterbildungen der Anordnung nach dem Hauptanspruch möglich.

Die Schultern am Boden des Speicherbehälters können durch stufenförmige Absetzungen oder schwellenartige Erhöhungen des Bodens gebildet sein, die bereits bei dessen Herstellung ohne zusätzliche Arbeitsgänge eingeformt werden können. Die Schultern können jedoch auch durch Leisten oder dergl. gebildet sein, die am Boden des Speicherbehälters befestigt sind und deren Höhe ohne Rücksicht auf Fertigungserfordernisse allein auf die gewünschte Funktion abgestimmt werden kann.

Eine einfache Ausführung ergibt sich, wenn die ansteigende Förderstrecke direkt an den Speicher angebaut ist und Speicherbehälter und Förderstrecke einen gemeinsamen Schwingantrieb haben. In manchen Fällen kann es vorteilhaft sein, wenn eine parallel zur Schwingungsrichtung verlaufende Zwischenwand zwischen dem Boden des Speicherbehälters und der ansteigenden Förderstrecke vorgesehen ist, welche im Bereich der tiefsten Stelle des Bodens eine Durchgangsöffnung hat und vorzugsweise auch in den zwischen den Schultern des Bodens befindlichen Bereichen mit in die Förderstrecke führenden Durchgangsöffnungen versehen ist.

Die Förderstrecke kann starr bzw. einstückig mit dem Boden des Speicherbehälters verbunden sein und gegebenenfalls an einer Stufe in diesen übergehen. Eine Zwischenwand verhindert, daß sich die Kleinteile auf dem Boden des Speicherbehälters und auf der Förderstrecke an ihrer gegenläufigen Bewegung behindern. Die Höhe und Ausbildung der Zwischenwand kann entsprechend der Teilegeometrie variieren.

Eine in bezug auf eine ungestörte Förderung der Kleinteile besonders vorteilhafte Ausführung ergibt sich, wenn die Schultern am geneigt verlaufenden Boden des Speicherbehälters derart im Winkel zur Schwingungsrichtung angeordnet sind, daß ihre tieferliegenden Endabschnitte der Förderstrecke benachbart sind. In diesem Fall verhindern die Schultern nicht nur, daß die gespeicherten Kleinteile am Behälterboden aufwärts wandern, sondern sie üben auch auf die auftreffenden bzw. an ihnen anliegenden Kleinteile eine von der Förderstrecke wegweisende Kraftkomponente aus. Dadurch werden die auf den einzelnen, zwischen den Schultern liegenden Bereichen des Behälterbodens sich befindenden Haufwerke der Kleinteile von der Förderstrecke abgedrängt, so daß sich auf dieser bzw. auf deren Eingangsbereich kein Stau bilden kann. Die Haufwerke der Kleinteile werden dadurch abgebaut, daß die jeweils obenliegenden Kleinteile der Haufwerke möglichst entfernt von der Förderstrecke nach unten in den Ausgangsbereich des Speicherbehälters rutschen und von dort in den Eingangsbereich der Förderstrecke gelangen. Durch dieses seitliche Auseinanderdrücken von aufwärts geförderten und abwärts rutschenden bzw. gestoßenen Kleinteilen kann eine Zwischenwand zwischen dem Speicherbehälter und der Förderstrecke entfallen.

Wenn die Schultern am Behälterboden durch aufgesetzte Leisten gebildet sind, kann die Abstimmung vorteilhaft auch so erfolgen, daß freiliegende Kleinteile bzw. unter dem Einfluß der Schwerkraft und des Schwingantriebs sich relativ zum Behälterboden hin- und herbewegende Kleinteile an der höherliegenden Leiste abprallen und gegen die nächste, tieferliegende Leiste geschleudert werden, an der sie in die Förderstrecke ausgeleitet werden. Dadurch kann auch bei teilgefülltem bzw. sich entleerendem Speicherbehälter eine gleichmäßige Beschickung der Förderstrecke erreicht werden, wobei sich die einzelnen, durch die Leisten voneinander abgetrennten Bodenbereiche des Speicherbehälters nacheinander entleeren.

In Weiterbildung der Erfindung wird vorgeschlagen, daß die ansteigende Förderstrecke mindestens über einen Teil ihrer Breite ein die Mitnahme der Kleinteile begünstigendes Querschnittsprofil hat. Bei zylindrischen Kleinteilen kann die ansteigende Förderstrecke zweckmäßig mit einer im Querschnitt V-förmigen Längsrinne versehen bzw. über ihre ganze Breite als eine derartige Rinne ausgebildet sein.

In manchen Fällen kann es auch vorteilhaft sein, wenn die ansteigende Förderstrecke mit einem Bürstenbelag versehen ist, der sich selbsttätig der Form der Kleinteile annähernd anpaßt. Vorteilhaft kann auch eine andere, der Teileform angepaßte Querschnittsform der Teileförderrinne vorgesehen werden. Verwendung finden können auch andere Beläge hoher Reibung.

Bei Speicherbehältern für bestimmte Werkstücke/Werkstückklassen bzw. bei als Zwischenpuffer dienenden Speicherbehältern kann der Boden des Speicherbehälters auch die Funktion einer Ausweichstrecke für aus der Förderstrecke seitlich abgedrängte Kleinteile ausüben, auf welcher diese Kleinteile zum Eingangsbereich der Förderstrecke zurückgeführt werden.

Wenn der an die ansteigende Förderstrecke anschließende weitere Förderer ein Orientierungsförderer ist und eine parallel und gegenläufig zur Förderstrecke angeordnete Rückfürstrecke für überschüssige und/oder nicht orientierte Kleinteile hat, kann durch entsprechende Bemessung der Teile und Antriebe die Rückführstrecke des Orientierungsförderers mit der gegebenenfalls in den Speicherbehälter integrierten ansteigenden Förderstrecke einen Umlaufspeicher bilden, welcher die gesamte Speicherkapazität der Einrichtung erhöht.

### Zeichnung

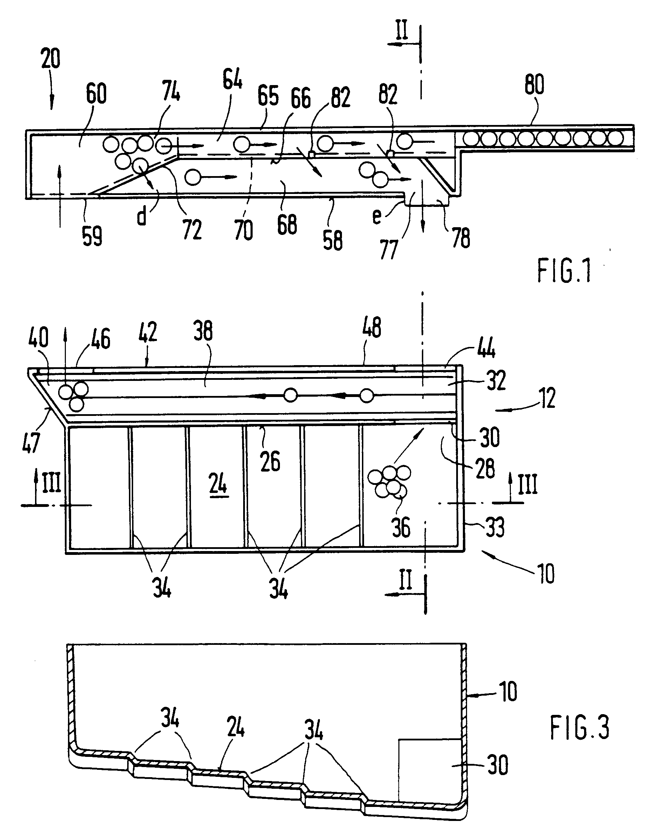

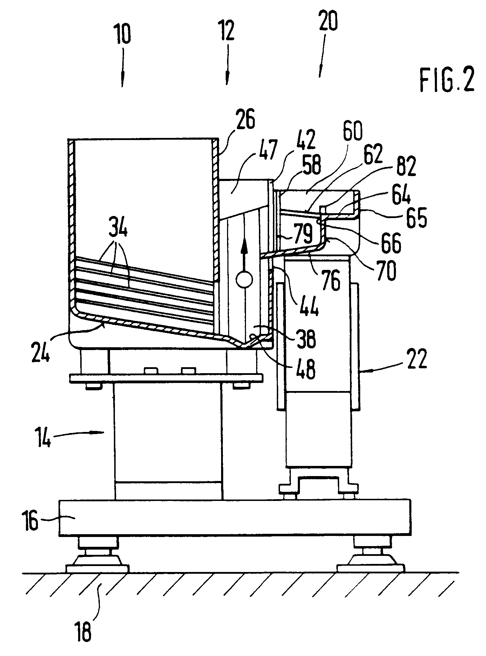

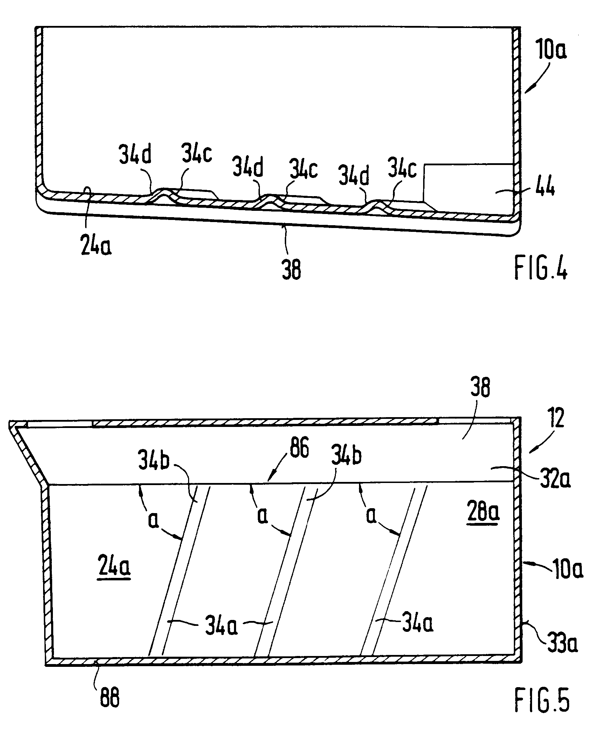

Zwei Ausführungsbeispiele der Erfindung sind in der Zeichnung dargestellt und in der nachfolgenden Beschreibung näher erläutert. Es zeigen in schematischer Darstellung Figur 1 eine Draufsicht auf eine aus Speicherbehälter samt ansteigender Förderstrecke bestehenden Baueinheit und einen daneben angeordneten Orientierungsförderer nach dem ersten Ausführungsbeispiel, Figur 2 einen Schnitt nach der Linie II-II in Figur 1, Figur 3 einen Schnitt nach der Linie III-III in Figur 1, Figur 4 einen der Figur 3 entsprechenden Längsschnitt durch den Speicherbehälter nach dem zweiten Ausführungsbeispiel und Figur 5 eine Draufsicht auf den Speicherbehälter nach Figur 4.

### Beschreibung der Ausführungsbeispiele

Die Einrichtung nach den Figuren 1 bis 3 hat einen Speicherbehälter 10, der mit einem linearen Schrägförderer 12 eine Baueinheit bildet. Beide Aggregate 10, 12 haben einen gemeinsamen Schwingantrieb 14 (Figur 2), der auf einer Grundplatte 16 sitzt und über diese auf einem Fundament 18 abgestützt ist. Parallel neben dem Schrägförderer 12 ist ein linearer Orientierungsförderer 20 angeordnet, der einen Schwingantrieb 22 (Figur 2) hat, welcher ebenfalls auf der Grundplatte 16 befestigt ist.

Der Speicherbehälter 10 hat einen Boden 24 und eine den Behälterbereich vom Förderbereich trennende Zwischenwand 26, die in der Behälterecke 28 mit einer Öffnung 30 versehen ist, welche in einen Eingangsbereich 32 des Schrägförderers 12 führt. Der Boden 24 ist gegen die Zwischenwand 26 und gegen die eine Querwand 33 des Speicherbehälters 10 abwärts geneigt, so daß er in der Behälterecke 28 seinen tiefsten Bereich hat. Der Boden 24 ist ferner mit einer Anzahl von quer zur Schwingungsrichtung angeordneten Stufen 34 versehen, die sich je über die gesamte Breite des Bodens 24 erstrecken.

Durch das Symbol 36 ist ein Haufwerk von im Speicherbehälter 10 befindlichen Kleinteilen angedeutet, die bei laufendem Schwingantrieb 14 gegen die Öffnung 30 gefördert werden.

Der Schrägförderer 12 hat eine Förderstrecke 38, die vom Eingangsbereich 32 ansteigend zu einem höherliegenden Ausgangsbereich 40 führt. An der vom Speicherbehälter 10 abgekehrten Seite ist der Schrägförderer 12 von einer Seitenwand 42 begrenzt, die im Eingangsbereich 32 mit einer nach oben offenen Randausklinkung 44 versehen ist und im Ausgangsbereich 40 eine bis zur Förderstrecke 38 reichende Öffnung 46 freiläßt. Der Ausgangsbereich 40 ist von einer Wand 47 begrenzt, welche zur Förderrichtung schräg gestellt ist und im Ausgangsbereich ankommende Kleinteile in die Öffnung 46 lenkt.

Die ansteigende Förderstrecke 38 ist so ausgebildet, daß zwischen ihr und den zu fördernden Kleinteilen möglichst hohe Reibung auftritt. Zu diesem Zweck ist die Förderstrecke 38 mit einem in der Zeichnung nicht dargestellten Reibungsbelag überzogen und außerdem mit einem der Gestalt der Kleinteile angepaßten Querschnittsprofil versehen. Im vorliegenden Fall wird z.B. angenommen, daß die gespeicherten Kleinteile eine zylindrische Außenform haben. Zur Erhöhung der Reibungskräfte ist die Förderstrecke 38 mit einem V-förmigen Bodenabschnitt 48 versehen, welcher dem Außendurchmesser der Gleitteile angepaßt ist und sich über die ganze Länge des Schrägförderers 12 erstreckt.

Der Orientierungsförderer 20 hat eine dem Schrägförderer 12 zugekehrte Seitenwand 58, die eine der Öffnung 46 des Schrägförderers 12 gegenüberliegende Öffnung 59 aufweist, welche in einen Eingangsbereich 60 führt. Dieser hat einen Boden 62 (Figur 2), der sich schräg nach unten bis auf die Höhe einer Orientierungsstrecke 64 absenkt. Diese hat eine Lauffläche, die in der Breite von einer Rückwand 65 und einer Längskante 66 begrenzt ist, welche etwa in Breitenmitte des Orientierungsförderers 20 verläuft. Parallel neben der Orientierungsstrecke 64 ist eine Rückführstrecke 68 angeordnet, die in der Breite von der Seitenwand 58 und einer Zwischenwand 70 begrenzt ist, welche bis zur Längskante 66 hochgezogen ist. Die Rückführstrecke 68 liegt tiefer als die Orientierungsstrecke 64.

Die Zwischenwand 70 hat einen dem Eingangsbereich 60 zugekehrten Wandabschnitt 72, welcher den Eingangsbereich 60 gegen einen Übergangsbereich 74 zur Orientierungsstrecke 64 stetig verschmälert. Die Rückführstrecke 68 hat einen Boden 76, der gegen die Seitenwand 58 hin leicht abfällt, welche am Ausgang der Rückführstrecke 68 mit einer bis zum Boden 76 reichenden Öffnung 77 versehen ist. Diese liegt nach dem Zusammenbau der Teile der Randausklinkung 44 in der Seitenwand 42 des Schrägförderers 12 gegenüber, wobei ein zungenartiger Ansatz 78 des Bodens 76 in den Eingangsbereich 32 des Schrägförderers 12 hineinragt. Die Höhe der Seitenwand 58 ist zwischen den Punkten d und e bis auf eine Überlaufkante 79 (Figur 2) abgesenkt, die einen Stau von Kleinteilen in der Rückführstrecke 68 verhindert.

Die Orientierungsstrecke 64 geht schnittstellenfrei in eine Ausgangsstrecke 80 über, die als Pufferstrecke ausgebildet ist und gegebenenfalls ein auswechselbares Zusatzteil sein kann. Die Orientierungsstrecke 64 selbst ist mit in der Zeichnung nur schematisch angedeuteten Schikanen 82 versehen, welche nicht orientierte Kleinteile über die Längskante 66 in die Rückführstrecke 68 auslenken. Die Lauffläche und die Schikanen der Orientierungsstrecke 64 sind den zu fördernden Kleinteilen angepaßt. Diese Elemente können zweckmäßig als auswechselbare Teile ausgebildet sein.

Die beschriebene Einrichtung arbeitet wie folgt:
Der Schwingantrieb 14 befördert das im Speicherbehälter 10 enthaltene Haufwerk der Kleinteile gegen die Behälterecke 28, von wo die Kleinteile durch die Öffnung 30 in den Eingangsbereich 32 des Schrägförderers 12 gelangen. Die Stufen 34 am Boden 24 des Speicherbehälters 10 stellen dabei sicher, daß die gespeicherten Kleinteile nicht aufwärts wandern und über die Zwischenwand 26 in den Ausgangsbereich des Schrägförderers 12 fallen, wo sie einen Stau verursachen könnten.

Vom Eingangsbereich 32 des Schrägförderers 12 gelangen die Kleinteile auf der Förderstrecke 38 in Richtung der eingezeichneten Pfeile nach oben in den Ausgangsbereich 40 und von dort in den Eingangsbereich 60 des Orientierungsförderers 20. Neben der Oberflächenbeschaffenheit und geometrischen Gestaltung der Förderstrecke 38 sind auch der Schwingantrieb 14 und der Steigungswinkel so auf die Kleinteile abgestimmt, daß in einem weiten Bereich der Förderleistung die auf der Förderstrecke 38 unmittelbar aufliegenden Kleinteile sicher gefördert werden und aufeinanderliegende Kleinteile bei vorhandener Ausweichmöglichkeit und zumindest bei laufendem Antrieb voneinander abrutschen. Es bildet sich so in einer senkrecht auf der Förderstrecke 38 stehenden Ebene ab einer bestimmten Belegung bzw. Förderleistung ein die Förderung nicht behindernder Umlauf, der es ohne Einbuße an Funktionssicherheit gestattet, dem Schrägförderer 12 eine gewisse Speicher- bzw. Pufferfunktion für eine Teilmenge der Kleinteile zuzuordnen.

Vom Eingangsbereich 60 des Orientierungsförderers 20 gelangen die Kleinteile in die Orientierungsstrecke 64, in welcher sich nicht orientierende Kleinteile an den Schikanen 82 seitlich in die Rückführstrecke 68 abgelenkt werden, auf der sie in den Eingangsbereich 32 des Schrägförderers 12 zurückgelangen. Die orientierten Kleinteile werden in die Ausgangsstrecke 80 gefördert und von dort bedarfsweise von der Arbeitsstation abgerufen. Bei Rückstau in der Orientierungsstrecke 64 fallen Kleinteile aus dem Eingangsbereich 60 oder dem Übergangsbereich 74 über die Bodenkante am Wandabschnitt 72 ebenfalls in die Rückführstrecke 68, von wo sie gezielt in den Eingangsbereich 32 des Schrägförderers 12 zurückgeführt werden.

Falls sich ausnahmsweise auch in der Rückführstrecke 68 ein Stau bilden sollte, werden die Kleinteile über die Überlaufkante 79 auf die Förderstrecke 38 des Schrägförderers 12 zurückgeführt. Durch die im Normalfall gezielte Zurückführung der Kleinteile in den Eingangsbereich 32 des Schrägförderers 12 wird ebenfalls ein Umlauf der Kleinteile im Schrägförderer 12 unterstützt, der eine Haufswerkbildung in dessen Ausgangsbereich 40 verhindert und so eine einwandfreie Funktion der Einrichtung sicherstellt.

Beim zweiten Ausführungsbeispiel nach den Figuren 4 und 5 ist neben dem Schrägförderer 12 ein Speicherbehälter 10a vorgesehen, der mit dem Schrägförderer 12 eine Baueinheit bildet und gemeinsam mit diesem schwingend angetrieben ist. Der Speicherbehälter 10a hat einen Boden 24a, der vorzugsweise nur in Schwingungsrichtung geneigt verläuft und zweckmäßig nur im Bereich der Behälterecke 28a auch eine Neigung gegen den Schrägförderer 12 aufweist. Der Boden 24a geht an einer Kante 86 in die etwas tieferliegende, jedoch gleichsinnig und mit dem gleichen Winkel ansteigende Förderstrecke 38 des Schrägförderers 12 über. Eine Zwischenwand zwischen dem Speicherbehälter 10a und dem Schrägförderer 12 ist bei diesem Ausführungsbeispiel nicht vorgesehen. Das Gefälle des Bodens 24a gegen die Behälterecke 28a bzw. der dieser benachbarten Querwand 33a kann je nach Speichergut 5° bis 30° betragen.

Der Speicherbehälter 10a unterscheidet sich von jenem nach dem ersten Ausführungsbeispiel ferner durch eine andere Ausbildung der Schultern am Boden 24a, die eine Aufwärtsbewegung der gespeicherten Kleinteile hemmen bzw. verhindern. Anstelle von Stufen 34 ist der Boden 24a mit schwellenartigen Erhöhungen 34a versehen, die in den aus Blech bestehenden Boden 24a eingeprägt sind. Die Erhöhungen 34a sind außerdem so in einem Winkel a zur Kante 86 bzw. zur Schwingungsrichtung ausgerichtet, daß ihre tieferliegenden Endabschnitte 34b der Förderstrecke 38 benachbart sind. Anstelle von schwellenartigen Erhöhungen 34a könnten auch Leisten auf den Behälterboden aufgesetzt sein, deren Höhe unabhängig vom Fertigungsbedingungen an die gewünschte Funktion angepaßt werden kann. In manchen Fällen könnte es auch vorteilhaft sein, wenn die schwellenartigen Erhöhungen am Boden 24a als scharfkantige Querbalken ausgebildet sind, die einstückig an den Boden angespritzt oder als zusätzliche Teile auf diesem befestigt sind.

Im Betrieb der Einrichtung nach den Figuren 4 und 5 üben die Erhöhungen 34a auf die gegen ihre der Behälterwand 33a zugekehrte Flanke 34c anstoßenden bzw. auf die an dieser Flanke anliegenden Kleinteile eine von der Förderstrecke 38 wegweisende Kraftkomponente aus. Dadurch werden die auf den einzelnen, zwischen den Erhöhungen 34a liegenden Bereichen des Behälterbodens 24a sich befindlichen Haufwerke der Kleinteile von der Förderstrecke 38 ab und gegen die Seitenwand 88 des Speicherbehälters 10a gedrängt, so daß sich auf der Förderstrecke 38 kein Stau bilden kann. Die auf den Haufwerken obenliegenden Kleinteile rutschen in den Ausgangsbereich des Speicherbehälters 10a, von wo sie über die Kante 86 in den Eingangsbereich 32a der Förderstrecke 38 fallen. Sobald bei sich entleerendem Speicherbehälter 10a die Kleinteile Relativbewegungen gegenüber dem Behälterboden 24a ausführen, werden sie beim Auftreffen auf die oberen Flanken 34d der Erhöhungen 34a gegen die Kante 86 gelenkt und können dort in von Kleinteilen nicht belegte Lücken der Förderstrecke 38 fallen.

## Patentansprüche

1. Einrichtung zum Speichern und Zuführen von Kleinteilen, mit einem kastenförmigen Speicherbehälter (10, 10a) für ein ungeordnetes Haufwerk (36) von Kleinteilen, der mit einem Schwingantrieb (14) versehen ist und dessen Boden (24, 24a) in Schwingungsrichtung geneigt verläuft, und ferner mit einer neben dem Boden (24, 24a) des Speicherbehälters (10, 10a) angeordneten, von dessen tiefster Stelle (28) ausgehenden und in Schwingungsrichtung gleichsinnig wie dieser ansteigenden Forderstrecke (38), die ebenfalls schwingend angetrieben ist und in den höhergelegenen Eingangsbereich (60) eines weiteren Förderers (20), insbesondere eines linearen Orientierungsförderers führt, dadurch gekennzeichnet, daß mindestens ein Teilbereich des Bodens (24, 24a) des Speicherbehälters (10, 10a) mit quer zur Schwingungsrichtung verlaufenden, gegen die tiefste Stelle des Bodens gerichteten Schultern (34, 34a) zum Hemmen bzw. Verhindern einer Aufwärtsbewegung der gespeicherten Kleinteile versehen ist.

2. Einrichtung nach Anspruch 1, dadurch gekennzeichnet, daß die Schultern am Boden (24) des Speicherbehälters (10) durch stufenförmige Absetzungen (34) des Bodens gebildet sind.

3. Einrichtung nach Anspruch 1, dadurch gekennzeichnet, daß die Schultern am Boden (24a) des Speicherbehälters (10a) durch schwellenartige Erhöhungen (34a) des Bodens gebildet sind.

4. Einrichtung nach Anspruch 1, dadurch gekennzeichnet, daß die Schultern am Boden des Speicherbehälters durch aufgesetzte Leisten oder dergleichen gebildet sind.

5. Einrichtung nach Anspruch 1, dadurch gekennzeichnet, daß die ansteigende Förderstrecke (38) an den Speicherbehälter (10) angebaut ist und Speicherbehälter (10, 10a) und Förderstrecke (38) einen gemeinsamen Schwingantrieb (22) haben.

6. Einrichtung nach Anspruch 5, dadurch gekennzeichnet, daß eine parallel zur Schwingungsrichtung verlaufende Zwischenwand (26) zwischen dem Boden (24) des Speicherbehälters (10) und der ansteigenden Förderstrecke (38) vorgesehen ist, welche im Bereich der tiefsten Stelle des Bodens (24) eine Durchgangsöffnung (30) hat und vorzugsweise auch in den zwischen den Schultern (34, 34a) des Bodens (24, 24a) befindlichen Bereichen mit in die Förderstrecke (38) führenden Durchgangsöffnungen versehen ist.

7. Einrichtung nach einem der vorhergehenden Ansprüche, dadurch gekennzeichnet, daß die Schultern (34a) am geneigt verlaufenden Boden (24a) des Speicherbehälters (10a) derart im Winkel (a) zur Schwingungsrichtung angeordnet sind, daß ihre tieferliegenden Endabschnitte (34b) der Förderstrecke (38) benachbart sind.

8. Einrichtung nach einem der vorhergehenden Ansprüche, dadurch gekennzeichnet, daß die ansteigende Förderstrecke (38) mindestens über einen Teil ihrer Breite ein die kraft- bzw. formschlüssige Mitnahme der Kleinteile begünstigendes Querschnittsprofil hat.

9. Einrichtung nach Anspruch 8, dadurch gekennzeichnet, daß die ansteigende Förderstrecke (38) mindestens über einen Teil ihrer Breite ein V-förmiges Querschnittsprofil hat.

10. Einrichtung nach Anspruch 8, dadurch gekennzeichnet, daß die ansteigende Förderstrecke (38) mit einer Längsrinne mit U-förmigem Querschnittsprofil versehen ist.

11. Einrichtung nach einem der vorhergehenden Ansprüche, dadurch gekennzeichnet, daß die ansteigende Förderstrecke (38) mindestens über einen Teil ihrer Breite eine die Mitnahme der Kleinteile begünstigende Oberflächenbeschaffenheit hat.

12. Einrichtung nach Anspruch 12, dadurch gekennzeichnet, daß die ansteigende Förderstrecke (38) mit einem Bürstenbelag versehen ist.

## Claims

1. Device for storing and feeding small parts, having a box-shaped storage container (10, 10a) for a disorderly pile of debris (36) of small parts, which container is provided with a vibration drive (14) and the base (24, 24a) of which slopes in the vibration direction, and additionally having a conveying section (38), which is disposed alongside the base (24, 24a) of the storage container (10, 10a), originates from the lowest point (28) of the base and ascends in the vibration direction in the same direction as this and which is likewise vibratingly driven and leads into the superior inlet area (60) of a further conveyor (20), in particular of a linear orientation conveyor, characterised in that at least a part-area of the base (24, 24a) of the storage container (10, 10a) is provided with shoulders (34, 34a), running transversely to the vibration direction and directed towards the lowest point of the base, for inhibiting or preventing an upward movement of the stored small parts.

2. Device according to Claim 1, characterised in that the shoulders on the base (24) of the storage container (10) are formed by step-shaped offsets (34) of the base.

3. Device according to Claim 1, characterised in that the shoulders on the base (24a) of the storage container (10a) are formed by sill-like elevations (34a) of the base.

4. Device according to Claim 1, characterised in that the shoulders on the base of the storage container are formed by mounted strips or the like.

5. Device according to Claim 1, characterised in that the ascending conveying section (38) is built onto the storage container (10) and the storage container (10, 10a) and the conveying section (38) have a common vibration drive (22).

6. Device according to Claim 5, characterised in that a partition (26), running parallel to the vibration direction, is provided between the base (24) of the storage container (10) and the ascending conveying section (38), which partition has a pass-through opening (30) in the area of the lowest point of the base (24) and is preferably also provided, in the areas located between the shoulders (34, 34a) of the base (24, 24a), with pass-through openings leading into the conveying section (38).

7. Device according to one of the preceding claims, characterised in that the shoulders (34a) on the sloping base (24a) of the storage container (10a) are disposed in such a way at an angle (a) to the vibration direction that their inferior end sections (34b) are adjacent to the conveying section (38).

8. Device according to one of the preceding claims, characterised in that the ascending conveying section (38) has, at least over a part of its width, a cross-sectional profile which promotes the non-positive or positive take-up of the small parts.

9. Device according to Claim 8, characterised in that the ascending conveying section (38) has, at least over a part of its width, a V-shaped cross-sectional profile.

10. Device according to Claim 8, characterised in that the ascending conveying section (38) is provided with a longitudinal groove of U-shaped cross-sectional profile.

11. Device according to one of the preceding claims, characterised in that the ascending conveying section (38) has, at least over a part of its width, surface characteristics which promote the take-up of the small parts.

12. Device according to Claim 12 [sic], characterised in that the ascending conveying section (38) is provided with a brush covering.

## Revendications

1. Dispositif pour stocker et délivrer des petites pièces, comprenant un réservoir de stockage (10, 10a) en forme de caisse, recevant un tas (36) inordonné de petites pièces et muni d'un entraîneur vibrant (14), le fond (24, 24a) du réservoir, en pente dans la direction des vibrations, ayant près de lui une voie de transport (38) montant à partir du point le plus bas (28) du réservoir, selon la même pente que le fond du réservoir, cette voie étant également entraînée en vibration et aboutissant dans la zone d'entrée (60), située plus haut, d'un autre transporteur (20), en particulier un transporteur linéaire d'orientation, caractérisé en ce qu'au moins une partie du fond (24, 24a) du réservoir de stockage (10, 10a) présente des épaulements (34, 34a) perpendiculaires à la direction des vibrations et dirigés vers la partie la plus basse du réservoir, afin de retenir c'est-à-dire empêcher un mouvement de remontée des petites pièces stockées.

2. Dispositif selon la revendication 1, caractérisé en ce que les épaulements à la surface du fond (24) du réservoir de stockage (10) sont constitués par des décrochements (34) en forme de marches.

3. Dispositif selon la revendication 1, caractérisé en ce que les épaulements à la surface du fond (24a) du réservoir (10a) sont constitués par des reliefs (34a), en forme de vagues, formés par le fond.

4. Dispositif selon la revendication 1, caractérisé en ce que les épaulements à la surface du fond du réservoir sont produits par la pose de baguettes ou objets analogues.

5. Dispositif selon la revendication 1, caractérisé en ce que la voie de transport ascendante (38) et intégrée au réservoir de stockage (10), ce dernier et la voie de transport (38) ayant un entraîneur vibrant (22) commun.

6. Dispositif selon la revendication 5, caractérisé en ce qu'une paroi, parallèle à la direction des vibrations (26), s'étend entre le fond (24) du réservoir de stockage (10) et la voie de transport ascendante (38), la paroi présentant, vers la partie la plus basse du fond du réservoir (24) une ouverture de passage (30) et, avantageusement, également des ouvertures de passage communiquant avec la voie de transport (38), au niveau des zones du fond (24, 24a) comprises entre les épaulements (34, 34a).

7. Dispositif selon l'une des revendications précédentes, caractérisé en ce que les épaulements (34a) sur le fond en pente (24a) du réservoir de stockage (10a) ont avec la direction des vibrations un angle a tel que leurs extrémités (34b) les plus basses sont soumises de la voie de transport (38).

8. Dispositif selon l'une des revendications pécédentes, caractérisé en ce que la voie de transport ascendante (38) présente, sur au moins une partie de sa largeur, un profil transversal favorisant l'entraînement dynamique ou de forme des petites pièces.

9. Dispositif selon la revendication 8, caractérisé en ce que la voie de transport ascendante (38) présente, sur au moins une partie de sa largeur, un profil transversal en forme de V.

10. Dispositif selon la revendication 8, caractérisé en ce que la voie de transport ascendante (38) présente un canal longitudinal de section transversale en forme de U.

11. Dispositif selon l'une des revendications précédentes, caractérisé en ce que la voie de transport ascendante (38) présente, sur au moins une partie de sa largeur, une surface dont la constitution favorise l'entraînement des petites pièces.

12. Dispositif selon la revendication 11, caractérisé en ce que la voie de transport ascendante (38) est muni d'un revêtement à brosses.
